# EUROPEAN PATENT APPLICATION

(11) **EP 0 807 484 A1**
(43) Date of publication of application: **19.11.1997**
(21) Application number: 97201467.4
(22) Date of filing: 15.05.1997
(51) Int. Cl.: B23K 26/00, B23K 26/06

(54) **Method and apparatus for drilling a hole in solid material by laser beam irradiation**

(30) Priority: 16.05.1996 GB 9610258
(71) Applicant: BRITISH AEROSPACE PUBLIC LIMITED COMPANY, Farnborough, Hants. GU14 6YU (GB)
(72) Inventor: Williams, Stewart Wynn, British Aerospace PLC, Filton, Bristol BS12 7QW (GB)
(74) Representative: Rooney, Paul Blaise

(57) **Abstract**

A hole is drilled in a metal or ceramic work piece (6) by pulsed laser beam radiation from one or more sources (4) in stepwise fashion in two or more successive depth stages. Each depth stage utilises pulsed laser beam radiation at a different fluence from the preceding or succeeding stage. The first drilling stage takes place at a lower fluence than a second or subsequent drilling stage for each hole.

## Description

This invention relates to a method and apparatus for drilling a hole in solid material by laser beam irradiation particularly, but not exclusively, suitable for drilling a plurality of holes in parallel in a metal work piece.

Conventionally hole drilling in material by laser beam irradiation has been carried out in serial mode with an individual laser beam being used to drill one hole at a time. Drilling has been carried out with a single pulse of laser radiation or via a percussion drilling in which the laser beam radiation is pulsed repetitively and several pulses of laser beam radiation are necessary to drill the hole to the full depth. Alternatively drilling can be carried out conventionally by laser beam via vaporisation only but to achieve high rates of drilling in metal the bulk of the material has to be removed via molten liquid metal expulsion. A limitation of conventional percussion drilling by laser is that as the hole becomes deeper the laser pulse energy required to remove the molten material becomes greater. Hence to achieve high speed drilling the laser pulse has to be large enough to remove the molten material all the way down through the hole being drilled. It is thus difficult to improve the drilling rate with conventional percussion laser beam techniques without greatly increasing the laser pulse energy to expel the molten drilling products and this considerably limits the usefulness of the percussion laser drilling technique in industrial applications.

There is thus a need for a generally improved method and apparatus for drilling a hole in solid material by laser beam irradiation which at least minimises the foregoing difficulties and offers the possibility of increasing the drilling rate without undesirably increasing the laser pulse energy or fluence required.

According to one aspect of the present invention there is provided a method for drilling a hole in solid material by laser beam irradiation, characterised in that the hole is drilled stepwise in two or more successive depth stages, with each stage utilising pulsed laser beam radiation at a different fluence from the preceding or succeeding stage for a desired period of time, and with the number of stages, fluence values and irradiation times being chosen in dependence upon the composition and thickness of the solid material to be drilled and the depth and cross-sectional area of the required hole.

Preferably at least two holes are drilled with a first of said stages being carried out at one position of the laser beam and solid material and with at least a second of said stages being carried out at a different relative position of said laser beam and solid material so that a plurality of holes may be drilled in stepwise fashion.

Conveniently each stage laser beam radiation is provided by a different laser source.

Advantageously the first stage laser is operated at a lower fluence than a second or subsequent stage laser.

Preferably the laser beam radiation for a plurality of stages is provided by a single laser source.

Conveniently the laser beam radiation is provided by an excimer laser, or by a TEA CO₂ laser, or by a Nd-YAG laser.

Advantageously a laser beam from the single laser source is passed through a microlenslet ray operable so that the laser beamlets produced by the lenslets have different fluence values such that at least one lenslet produces a beamlet with a fluence value sufficient to carry out said first depth stage and at least one lenslet produces a beamlet with a higher fluence sufficient to carry out said second depth stage.

Preferably the lenslets in the lenslet array are of different apertures and are arranged in a row.

Alternatively a laser beam from the single laser source is passed through a diffractive beam splitter operable so that the laser beamlets produced by the beam splitter have different fluence values such that at least one beamlet has a fluence value sufficient to carry out said first depth stage and at least one beamlet has a higher fluence sufficient to carry out said second depth stage.

Conveniently the solid material to be drilled is metallic such as metal or inorganic such as a ceramic.

Advantageously the solid material to be drilled is titanium metal and in which the fluence utilised is substantially 25 Joules/centimetre ²(J/cm²) for a thickness of titanium of substantially 0.65 millimetre, (mm), substantially 35J/cm² for a thickness of titanium of substantially 0.85mm and substantially 45J/cm² for a thickness of titanium of substantially 1.1mm.

According to a further aspect of the present invention there is provided apparatus for drilling a hole in solid material by laser beam irradiation, characterised by including at least one source of pulsed laser beam radiation, means for receiving radiation from said at least one source and for splitting it into laser beamlets for focussing on to solid material to be drilled, and means for locating said solid material relative to the receiving and splitting means and for providing relative movement between the laser beamlets and solid material.

Preferably the receiving and splitting means is a microlenslet array and the apparatus includes a beam shaping device located in the laser beam path between the at least one laser source and said microlenslet array.

Alternatively the receiving and splitting means is a diffractive beam splitter and the apparatus includes a focussing lens located in the laser beamlet path between the beam splitter and the solid material to be drilled.

Conveniently the apparatus has at least two laser sources with one source of higher fluence than the other or one of the other sources .

Advantageously the laser source is an excimer laser, a TEA CO₂ laser, or a Nd-YAG laser.

Advantageously the lenslets in the array have different size apertures so as each to collect different amounts of laser energy or fluence.

For a better understanding of the present invention, and to show how the same may be carried into effect, reference will now be made, by way of example, to the accompanying drawings, in which;
Figure 1 is a graphic display of pulse energy to drilling depth to show a typical etch rate curve for conventional excimer laser percussion metal drilling;
Figure 2 is a graphic display of fluence or pulse energy against drilled hole depth showing typical etch rate curves for conventional excimer laser percussion metal drilling as shown in Figure 1 but for different thicknesses of material being drilled;
Figure 3A is a diagrammatic view of a microlenslet array for use in the method and apparatus of the present invention;
Figure 3B is a graphical representation of an energy profile across the array of Figure 3A,
Figure 4 is a graphical display showing variation of etch rate with fluence for three different thicknesses of sheet titanium being drilled,
Figure 5 is a diagrammatic view of apparatus according to the present invention for drilling a hole in solid material by laser beam irradiation, utilising the method of the present invention, and
Figure 6 is a diagrammatic view of apparatus according to the present invention for drilling a plurality of holes in solid material by laser beam irradiation, utilising the method of the present invention.

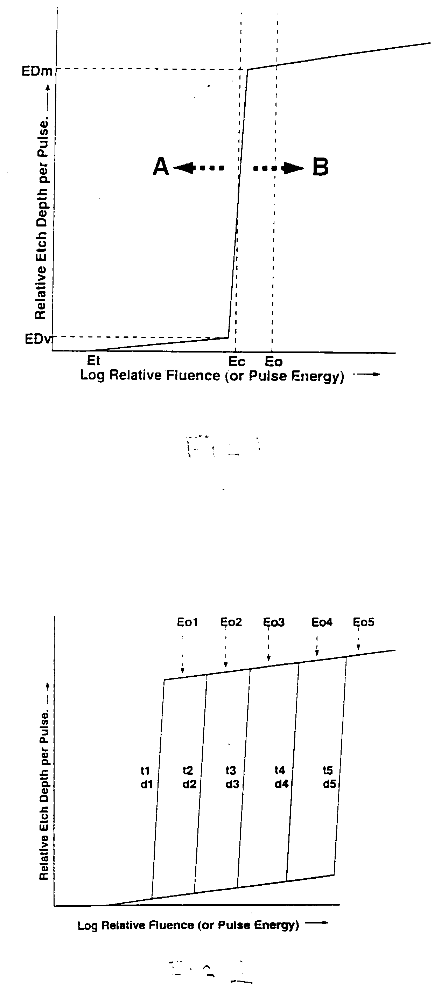

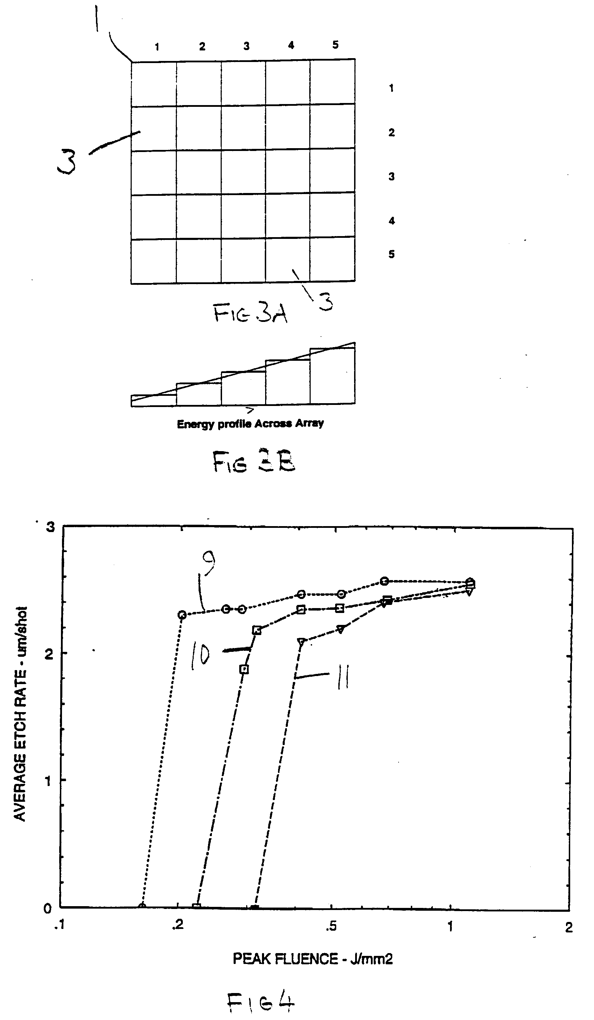

With reference to Figures 1 and 2 of the accompanying drawings, and as referred to previously, a limitation of percussion laser drilling is that as the hole becomes deeper the laser pulse energy required to remove the molten drilling product material becomes greater with resulting difficulty in achieving high speed drilling without utilising a large laser pulse sufficient to remove the waste molten drilling material all the way down through the hole.

This is explained by way of Figure 1 which shows a typical etch rate curve (a plot of laser pulse energy or fluence versus depth of material removed per pulse) for a typical metal. The average etch depth per pulse (average etch rate) is obtained by counting the number of pulses required to drill through the particular thickness of material being drilled. As the fluence is increased a point is reached at which material begins to be removed, denoted as threshold fluence Et. Further increases in fluence results in a gradual increase in etch rate until a point is reached, EDv, at which a sudden very large increase in etch rate to EDm is obtained. This large increase in etch rate is due to the process of waste melt expulsion being achieved throughout the whole of the drilling process. In region A of the Figure 1 the etch rate is dominated by the large number of pulses required to remove some or all of the material by vaporisation. Typically the average etch rates in this region will be in the range 0.01-0.1µm per pulse (depending on metal type and actual value of the fluence) so that for 1mm thick material many thousands of pulses are required to drill through. In region B all the material is removed via the waste melt expulsion process producing average etch rates in the range 1-30µm per pulse, requiring only a few hundred pulses to drill through 1mm thick material. The value of fluence or pulse energy at which the transition to wholly melt expulsion occurs is denoted as Ec. The value of Ec depends approximately linearly on the thickness of the material (or depth of the hole) that is being drilled as shown in Figure 2 and is typically 40J/CM² for 100µm diameter holes in 1mm thick aluminium alloys. Further increase in fluence or pulse energy again only results in small increases in etch rate. Hence the most energy efficient fluence level or pulse energy is one slightly greater than Ec, demoted Eo in Figure 1.

To achieve the most energy efficient percussion drilling of a hole the fluence or pulse energy should be increased incrementally as the hole depth increases. Referring to Figure 2 this means that down to a depth d1 the pulse energy should be Eo1, down to a depth d2 the energy should be increased to Eo2 etc. For serial drilling there is no real benefit in doing this because the extra energy saved in drilling the first part of the hole cannot be used so there is no overall increase in drilling rate over that just using a constant high pulse energy.

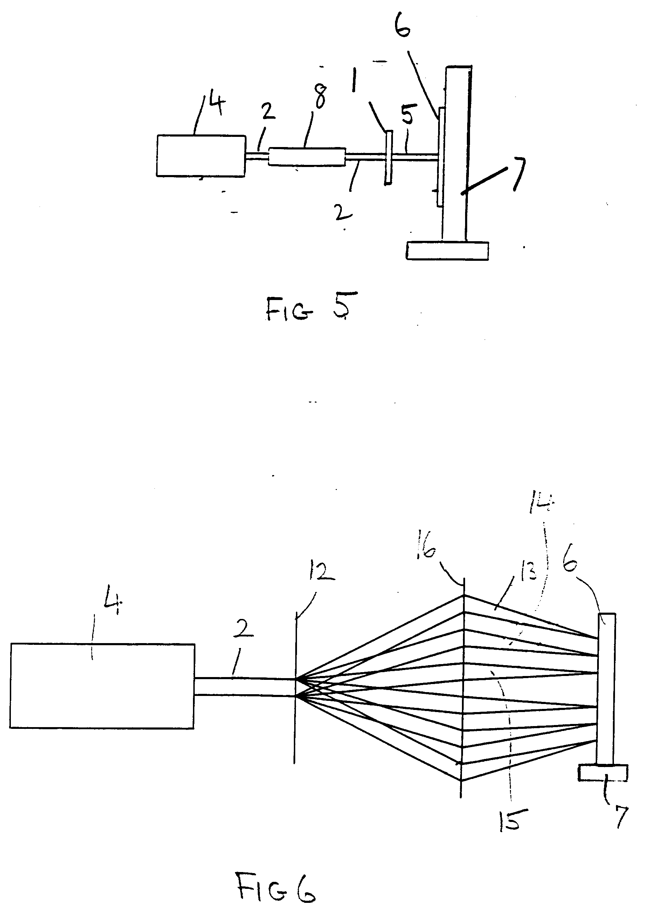

The method according to the present invention for drilling a hole in solid material such as metal by laser beam irradiation can employ the laser beam to drill many holes in parallel as shown in the Figure 6 embodiment or a single hole as shown in the Figure 5 embodiment. According to the method of the present invention the or each hole is drilled stepwise in two or more successive depth stages, with each stage utilising pulsed laser beam radiation at a different fluence from the preceding or succeeding stage for a desired period of time, and with the number of stages, fluence values and irradiation times being chosen in dependence upon the composition and thickness of the solid material to be drilled and the depth and cross-sectional area of the required hole. At least two holes are drilled with the first of the stages being carried out at one position of the laser beam and solid material and with at least a second of the stages being carried out at a different relative position of said laser beam and solid material so that a plurality of holes may be drilled in stepwise fashion. To this end a microlenslet array 1 as shown in Figure 5 is placed in the laser beam 2 and at the focus of each lenslet 3 as shown in Figure 3A a hole is drilled. This allows utilisation of the extra energy to give an increased hole drilling rate for a particular laser source.

Thus according to one embodiment of the present invention the laser beam radiation for a plurality of depth stages is provided by a single laser source 4 which preferably is an excimer laser or a TEA CO₂ laser. The laser beam 2 from the single source 4 is passed through the microlenslet array 1 as shown in Figure 4 which is operable so that the laser beamlets 5 produced by the lenslets 3 have different fluence values such that at least one lenslet produces a beamlet with a fluence value sufficient to carry out said first depth stage and at least one lenslet produces a beamlet with a higher fluence sufficient to carry out the second depth stage in the material 6. Thus the efficiency of drilling may be improved by providing the beamlets 5 produced by each lenslet 3 with a varying amount of pulse energy so that some contain more energy than others. The beamlets with the lower energy or fluence are used to drill the first depth stage of the hole whilst beamlets with higher pulse energies or fluences are used to drill succeeding depth stages of the hole.

For example a method of improving efficiency and drilling rate for the excimer laser drilling of hole arrays in a metal can be considered. Assume use of a 5 x 5 square lens array 1 as shown in Figure 3A. Conventionally such a device would be illuminated with a beam 2 having a uniform energy profile to ensure that all holes are drilled through simultaneously. By way of example it is assumed that for the size of hole to be drilled and the material involved to achieve melt expulsion throughout the drilling process (and hence a high drilling rate) each lenslet needs to have pulse energy of 5mJ. Hence, assuming 100% beam utilisation, the total energy required from the laser is 5 x 5 x 5= 125mJ. If however the lenslets in column 1 of Figure 3A are used to drill down 200µm into the material 6, then these lenslets only need to be illuminated with about 1mJ of energy. Once the hole has reached a depth of 200µm the material 6 is moved such that the hole is now drilled by the beam from a lenslet in column 2, containing about 2mJ of energy. This process is continued until the hole is 800µm deep when the last part of the hole is drilled by a lenslet in column 5 containing 5mJ of energy. The total laser energy then required to drill the same number of holes is 5 x (5 + 4 + 3 + 2 + 1) = 75mJ. The extra energy available can be used to drill more holes by having a larger array. In this case using an array of 8 x 5 lenslets 40 holes would be drilled in the time it takes to drill 25 holes using the conventional system. This represents an improvement in drilling efficiency and rate of 60%. The improvement in efficiency and rate is determined by the number of columns of lenslets used. For example if there are 10 columns of lenslets in the array the improvements in efficiency and rate would be 80%. The limit is reached when changing to a lenslet with a larger pulse energy between every pulse.

The energy density profile across the beam needed to produce the variable pulse energy from each lenslet 3 is shown in Figure 3B. It is likely that the continuously varying change would be achieved rather than the discreet changes also indicated. Methods for varying the energy profile across a laser beam are well known and include devices such as segmented mirrors, lens arrays, diffractive optics and other beam folding devices.

Using the apparatus of Figure 5 with a microlenslet array 1 having 1.2mm size lenslets 3 and operating with laser having a wavelength of 308nm at a pulsed frequency of 50Hz it is possible to drill holes according to the method of the invention in sheet titanium of various thicknesses under the conditions shown in Figure 4. Figure 4 is a graphical representation of average etch rate in µm/shot against peak fluence in J/mm² for titanium with curve 9 for titanium of 0.65 thickness, curve 10 for titanium of 0.85 thickness and curve 11 for titanium of 1.10mm thickness. From Figure 4 it can be seen that for titanium the critical fluences were in the range of from 18 to 20 J.cm², from 22 to 29 J/cm² and from 30 to 40 J/cm² for 0.65mm, 0.85mm, and 1.1mm thick titanium respectively. This gives optimum operating fluences of substantially 25J/cm² for substantially 0.65mm thick titanium, substantially 35 J/cm² for substantially 0.85mm thick titanium and substantially 45J/cm² for substantially 1.1mm thick titanium.

As shown in Figure 5 an apparatus according to one embodiment of the present invention for drilling a hole in solid material such as metal by laser beam irradiation includes at least one source 4 of pulsed laser beam radiation, and the microlenslet array 1 for receiving radiation from the source 4 and for focusing it as laser beamlets 5 on to solid material 6 to be drilled. The apparatus also includes means 7 for locating the solid material 6 relative to the lenslet array 1 and for providing relative movement between the laser beamlets 5 and solid material 6. Preferably the apparatus includes a beam shaping device 8 located in the laser beam path between the source 4 and array 1.

As a further alternative the lenslets 3 in the lenslet array 1 may be of different apertures and may be arranged in a row. In this way variation of the pulse energy in each beamlet from the array 1 is achieved by illuminating the array 1 with a conventional uniform profile beam using lenslets with different apertures so that they collect different amounts of energy. In this instance the lens array should be in the form of a single row of lenslets with the size of each lenslet only increasing in one dimension. The spatial beam pattern of the laser should then match the spatial pattern of the lenslets.

The technique of the present application is most applicable to lasers such as the excimer or TEA CO₂ laser which are well suited to parallel processing using lens arrays. The technique of the present invention may be used for metallic materials such as metals or inorganic materials such as ceramics.

Alternatively the laser source could be comprised of array type lasers. These devices are typically fabricated from semiconductor diodes and it would be arranged that the output power of these lasers would increase linearly along the array. The output power may also be used to pump other solid state materials such as Nd-YAG which would allow different wavelengths and pulse lengths to be achieved with the parallel beams with varying output energies. A further type of array laser is the RF pumped CO2 laser where again it could be arranged to have linearly increasing output energies from the individual outputs of the array.

Figure 6 of the accompanying drawings shows apparatus according to a second embodiment of the invention for carrying out the method of the invention. In the apparatus of Figure 6 like parts will be given the same reference numerals as in Figure 5 and will not be further described in detail. In the Figure 6 embodiment the source 4 is a q-switched Nd-YAG laser which outputs a collimated low divergence beam 2 to a two or one dimensional diffractive beam splitter 12. With the ND-YAG laser source 4 the pulses are short (typically 10ns) so that percussion drilling is favoured. In Figure 6 the beam 2 is split into beamlets (13, 14, 15) by the diffractive beamsplitter 12 and then focused onto the component 6 to be processed. It is a simple matter to arrange for the three beams, 13, 14 and 15 to have the appropriate energy for the parallel drilling method described. The diffractive beam splitter 12 is centro symmetric so that it is necessary to invert the lower beams so that they vary in the same manner as beams 13, 14 and 15. This inversion can be accomplished by using a prism (not shown). The beamlets are passed through a focussing lens 16.

If necessary the apparatus of Figures 5 and 6 could incorporate energy monitoring and stabilising devices, beam profile monitoring devices and additional means for producing relative motion between the beamlets 5 and material 6. In the illustrated example of Figure 5 the material 6 is moved relative to the lenslet array 1 but as an alternative the beam or beamlets 5 may be moved rather than the material 6 to provide the relative translation between the two.

## Claims

1. A method for drilling a hole in solid material (6) by laser beam irradiation, characterised in that the hole is drilled stepwise in two or more successive depth stages, with each stage utilising pulsed laser beam radiation at a different fluence from the preceding or succeeding stage for a desired period of time, and with the number of stages, fluence values and irradiation times being chosen in dependence upon the composition and thickness of the solid material (6) to be drilled and the depth and cross-sectional area of the required hole.

2. A method according to claim 1, in which at least two holes are drilled with a first of said stages being carried out at one position of the laser beam and solid material and with at least a second of said stages being carried out at a different relative position of said laser beam and solid material (6) so that a plurality of holes may be drilled in stepwise fashion.

3. A method according to claim 1 or claim 2, in which each stage laser beam radiation is provided by a different laser source (4).

4. A method according to claim 3, in which the first stage laser is operated at a lower fluence than a second or subsequent stage laser.

5. A method according to claim 1 or claim 2, in which the laser beam radiation for a plurality of stages is provided by a single laser source (4).

6. A method according to claim 5, in which the laser beam radiation is provided by an excimer laser, by a TEA CO₂ laser, or by a Nd-YAG laser

7. A method according to claim 5 or claim 6, in which a laser beam from the single laser source (4) is passed through a microlenslet array (1) operable so that the laser beamlets (5) produced by the lenslets (3) have different fluence values such that at least one lenslet (3) produces a beamlet with a fluence value sufficient to carry out said first depth stage and at least one lenslet produces a beamlet with a higher fluence sufficient to carry out said second depth stage.

8. A method according to claim 7, in which the lenslets (3) in the lenslet array (1) are of different apertures and are arranged in a row.

9. A method according to claim 5 or claim 6, in which a laser beam from the single laser source (4) is passed through a diffractive beam splitter operable so that the laser beamlets (13,14,15) produced by the beam splitter (12) have different fluence values such that at least one beamlet has a fluence value sufficient to carry out said first depth stage and at least one beamlet has a higher fluence sufficient to carry out said second depth stage.

10. A method according to any one of claims 1 to 9, in which the solid material (6) to be drilled is metallic, or inorganic.

11. A method according to claim 10, in which the solid material (6) to be drilled is a metal or a ceramic.

12. A method according to claim 10 or claim 11, in which the solid material (6) to be drilled is titanium metal and in which the fluence utilised is substantially 25 Joules/centimetre 2(J/cm²) for a thickness of titanium of substantially 0.65 millimetre (mm), substantially 35 J/cm² for a thickness of titanium of substantially 0.85mm and substantially 45 J/cm² for a thickness of titanium of substantially 1.1mm.

13. Apparatus for drilling a hole in solid material by laser beam irradiation, characterised by including at least one source (4) of pulsed laser beam radiation, a means (1,12) for receiving radiation from said at least one source (4) and for splitting it into laser beamlets (5,13,14,15) for focussing on to solid material (6) to be drilled, and means (7) for locating said solid material (6) relative to the receiving and splitting means (1,12) and for providing relative movement between the laser beamlets (5,13,14,15) and solid material (6).

14. Apparatus according to claim 13, wherein the receiving and splitting means is a microlenslet array (1) and including a beam shaping device (8) located in the laser beam path between the at least one laser source (4) and said microlenslet array (1).

15. Apparatus according to claim 14, wherein the lenslets (3) in the array (1) have different size apertures so as each to collect different amounts of laser energy or fluence.

16. Apparatus according to claim 13, wherein the receiving and splitting means (1,12) is a diffractive beam splitter (12) and including a focussing lens (16) located in the laser beamlet path between the beam splitter (12) and the solid material (6) to be drilled.

17. Apparatus according to claim 15 or claim 16, having at least two laser sources (4) with one source of higher fluence than the other or one of the other sources.

18. Apparatus according to any one of claims 13 to 17, wherein the or each laser source (4) is an excimer laser a TEA CO₂ laser or a Nd-YAG laser.
